# EUROPÄISCHE PATENTSCHRIFT

(11) **EP 1 396 398 B1**
(45) Veröffentlichungstag und Bekanntmachung des Hinweises auf die Patenterteilung: **21.06.2006**
(21) Anmeldenummer: 03090264.7
(22) Anmeldetag: 21.08.2003
(51) Int. Cl.: B60R 22/195

(54) **Gurtschlossstraffer**
Belt buckle pretensioner
Prétensionneur de boucle de ceinture de sécurité

(30) Priorität: 04.09.2002 DE 10241623; 10.12.2002 DE 10258479
(43) Veröffentlichungstag der Anmeldung: 10.03.2004
(73) Patentinhaber: TAKATA-PETRI (Ulm) GmbH, 89081 Ulm (DE)
(72) Erfinder: Walenta, Ulrich, 89075 Ulm (DE)
(74) Vertreter: Fischer, Uwe

(56) Entgegenhaltungen:
- EP-A- 0 588 262
- EP-A- 0 673 811
- DE-A- 4 113 094
- GB-A- 2 323 769
- US-A- 5 364 129

## Beschreibung

Die Erfindung betrifft einen Gurtschlossstraffer für ein Sicherheitsgurtsystem in einem Fahrzeug.

Ein Gurtschlossstraffer ist beispielsweise aus der EP-A1-0662408 bekannt. Die Funktion eines solchen Gurtschlossstraffers basiert darauf, dass ein über ein Zugseil mit einem Gurtschloss verbundener Kolben mittels einer pyrotechnischen Ladung verschoben wird, um so eine Straffung des Gurtes bei einem Unfall zu erreichen.

Nachteilig bei einem derartigen Gurtschlossstraffer ist insbesondere der benötigte Bauraum für den pyrotechnisch angetriebenen Kolben.

Aus der DE-A1-4319955 ist ein Gurtschlossstraffer bekannt, in dem anstatt eines pyrotechnisch angetriebenen Kolbens ein Drehbetätiger verwendet wird. Der Drehbetätiger wird durch eine pyrotechnische Antriebseinheit betätigt. Außerdem ist eine Arretiereinrichtung in Form einer Zahnstange vorgesehen, die eine Rückbewegung des Gurtschlosses entgegen der Straffrichtung verhindern soll. Immerhin benötigt der Drehbetätiger dieses Gurtschlossstraffers weniger Bauraum als ein pyrotechnisch angetriebene Kolben. Dennoch ist auch hier der Bauraumbedarf durch den Drehbetätiger, die pyrotechnische Antriebseinheit sowie die Arretiereinrichtung hoch.

Aus der britischen Veröffentlichungsschrift GB 2 323 769 A ist ein Gurtschlossstraffer mit den Merkmalen gemäß dem Oberbegriff des Anspruchs 1 bekannt. Bei diesem Gurtschlossstraffer ist ein Gasgenerator auf einem drehbaren Rastrad angebracht. Bei Auslösung des Gasgenerators wird des Rastrad in eine Rotation versetzt und wickelt dadurch ein Zugseil auf, wodurch eine Gurtstraffung erfolgt.

In der US-Patentschrift US 5,364,129 ist ein Gurtschlossstraffer beschrieben, bei dem eine Spindel ein Zugseil aufwickelt, sobald eine mit der Spindel in Verbindung stehende Antriebsfeder ausgelöst wird.

Eine Aufgabe der vorliegenden Erfindung ist es, einen platzsparenderen Gurtstraffer zu schaffen.

Diese Aufgabe wird durch die in dem Hauptanspruch angegebene Erfindung gelöst. Vorteilhafte Ausgestaltungen sind den Unteransprüchen zu entnehmen.

Durch Integration des Antriebs in der Spindel wird der benötigte Bauraum reduziert. Außerdem wird die Zahl der benötigten Einzelteile vermindert, da u.a. keine separate Antriebsspindel erforderlich ist. Vielmehr bildet die Spindel zum Aufwickeln des Zugseiles gleichzeitig die Antriebsspindel.

Eine Verschiebung des Gurtschlosses wird durch rotatorische statt translatorische Bewegung erreicht. Ein Vorteil dieses Ansatzes ist insbesondere, dass der für den Gurtschlossstraffer benötigte Bauraum quasi unabhängig von dem Grad der herzustellenden Gurtschlossstraffung, in jedem Fall aber geringer ist, als bei herkömmlichen Kolbenvorrichtungen.

Ein weiterer Vorteil ist, dass zur Realisierung der Gurtschlossstraffers Bauelemente eingesetzt werden können, die auch in Gurtaufrollern verwendet werden. Somit reduzieren sich der Aufwand und die Kosten bei der Entwicklung und Herstellung des Gurtschlossstraffers.

Außerdem hat der erfindungsgemäße Gurtschlossstraffer den Vorteil, dass der integrierte Spindelantrieb mit einer geringen Anzahl zusätzlicher Bauteile hergestellt werden kann; insbesondere zeichnet sich diese Ausgestaltung auch durch ein gutes Leistungsverhältnis bezogen auf das benötigte Bauraumvolumen aus.

Das Antriebsband kann im Ruhezustand des Gurtsstraffers zusätzlich um einen oder mehrere Führungselemente herum verlaufen. Mittels der Führungselemente kann der durch das Antriebsband eingegrenzte Raum beliebig definiert werden, insbesondere um die durch den Gasgenerator erzeugte Energie optimal in eine Rotation der Spindel zu übersetzen.

In einer vorteilhaften Ausgestaltung ist die Spindel mit einer Sperreinrichtung gekoppelt ist, die eine Rotation der Spindel entgegen der Zugseil-Aufrollrichtung blockiert und ein Abrollen des Zugseiles verhindert. Die Sperreinrichtung kann durch eine Verzahnung am Umfang der Spindel sowie eine Klinke am Fahrzeugchassis gebildet sein, wobei die Klinke mit der Verzahnung in Eingriff bringbar ist, und die Verzahnung derart ausgebildet ist, dass ein Eingriff nur bei Rotation der Spindel entgegen der Zugseil-Aufrollrichtung stattfindet.

Durch Integration der Sperreinrichtung an der Spindel kann der Bauraumbedarf zusätzlich reduziert werden.

Insgesamt zeichnet sich der Gurtsschlossstraffer also aus durch seine kompakte Bauweise und die Möglichkeit, Standardkomponenten verwenden zu können.

Ausführungsbeispiele der Erfindung werden nun anhand der Zeichnungen erläutert, und es zeigen:
Figur 1 schematisch eine Gurtvorrichtung mit einem Gurtschlossstraffer nach einer ersten Ausgestaltung der Erfindung;
Figur 2 schematisch eine Gurtvorrichtung mit einem Gurtschlossstraffer nach einer alternativen Ausgestaltung der Erfindung;
Figur 3 schematisch eine Zugseileinhängung an der Spindel nach einer Ausgestaltung der Erfindung;
Figur 4 schematisch eine erste Ansicht eines Gurtschlossstraffers nach einer Ausgestaltung der Erfindung;
Figur 5 schematisch eine zweite Ansicht des Gurtschlossstraffers aus Figur 4;
Figur 6 schematisch den Spindelantrieb des Gurtschlossstraffers aus den Figuren 4 und 5; und
Figur 7 schematisch die Kupplungshülse des Gurtschlossstraffers der Figuren 4 bis 6.

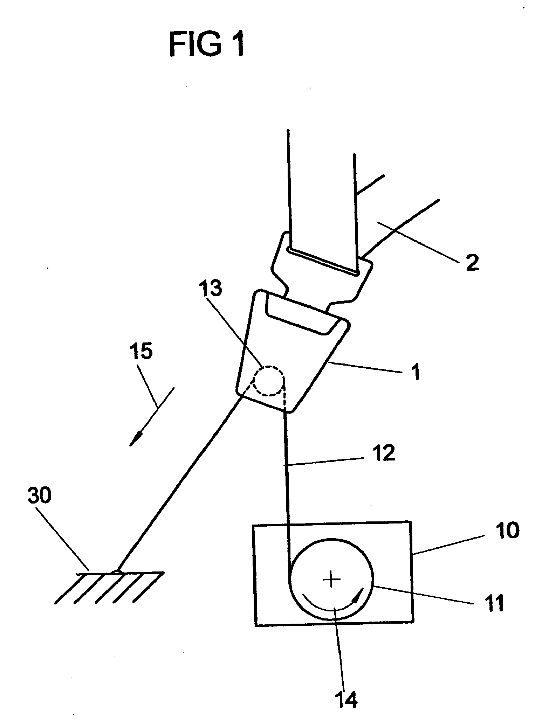

Figur 1 zeigt schematisch eine Gurtvorrichtung mit einem Gurtschlossstraffer nach einer Ausgestaltung der Erfindung. Die Gurtvorrichtung umfasst ein Gurtschloss 1 zur Verankerung eines Gurtes 2 gegenüber dem Fahrzeugchassis 30. Der Gurtschlossstraffer umfasst eine am Fahrzeugchassis verankerte Aufwickelvorrichtung 10 mit einer Spindel 11 zum Aufrollen eines (Stahl-) Zugseiles 12, das einerseits an der Spindel 11 und andererseits am Fahrzeugchassis 30 oder einem Gurtschlossstrafferrahmen verankert ist. Dazwischen verläuft das Zugseil 12 um eine Umlenkrolle 13 am Gurtschloss 1 herum. Die Umlenkrolle 13 ist in dem Gehäuse des Gurtschlosses 1 enthalten.

Figur 1 zeigt den Gurtschlossstraffer im nicht aktivierten Zustand. Bei einem Unfall wird die Spindel 11 in Rotation versetzt, so dass das Zugseil 12 aufgerollt und das Gurtschloss 1 in Richtung zur Verankerung des Zugseiles 12 am Fahrzeugchassis 30 verschoben wird. Je nach Ausgestaltung, insbesondere abhängig von der Dicke und Länge des Zugseiles 12, ist eine Führung vorgesehen, entlang derer das Gurtschloss 1 verschoben wird. Die Rotation der Spindel 11 ist durch den Pfeil 14 und die Verschiebung des Gurtschlosses 1 durch den Pfeil 15 angedeutet.

Die Rotation der Spindel 11 kann beispielsweise durch eine pyrotechnische Ladung ausgelöst werden. Die Rotation einer Spindel mittels pyrotechnischer Ladung ist als solche bekannt und deshalb nicht näher beschrieben. Statt einer pyrotechnischen Ladung können jedoch auch andere Drehmoment-Erzeugungsvorrichtungen eingesetzt werden.

Wird statt einer pyrotechnischen Ladung eine elektrische Drehmoment-Erzeugungsvorrichtung eingesetzt, so kann die Spindel 11 auch entgegen der Pfeilrichtung des Pfeils 14 gedreht werden, wodurch sich das Gurtschloss 1 entgegen der Pfeilrichtung 15 bewegt. Der Straffvorgang des Gurtschlosses 1 ist dann reversibel.

Außerdem ist die Spindel 11 mit einer Sperrvorrichtung versehen, die ein Zurückrotieren (entgegen der Richtung des Pfeiles 14) verhindern. Auch solche Sperrvorrichtungen sind als solche bekannt und deshalb nicht weiter erläutert.

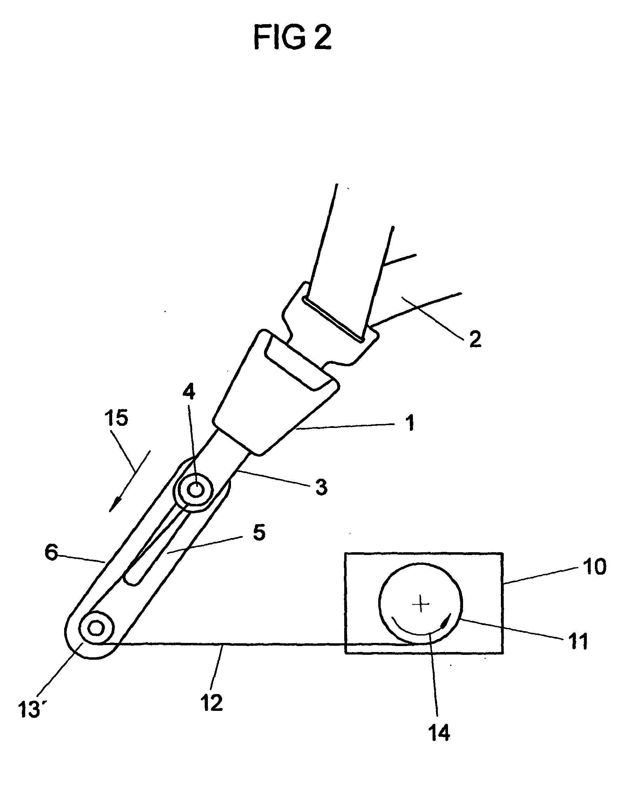

Figur 2 zeigt schematisch eine Gurtvorrichtung mit einem Gurtschlossstraffer nach einer alternativen Ausgestaltung der Erfindung. Hier ist das Gurtschloss 1 mit einem Befestigungsbeschlag 3 verbunden, dessen dem Gurtschloss 1 abgewandtes Ende mittels eines Führungsstiftes 4 in einem Langloch 5 einer Verankerungsplatte 6 verschieblich gelagert ist. Das dem Gurtschloss 1 abgewandte Ende der Verankerungsplatte 6 ist am Fahrzeugchassis befestigt.

Auch hier umfasst der Gurtschlossstraffer eine am Fahrzeugchassis verankerte Aufwickelvorrichtung 10 mit einer Spindel 11 zum Aufrollen eines Zugseiles 12, das einerseits an der Spindel 11 und andererseits an dem Befestigungsbeschlag 3 befestigt ist. Zwischen dem Befestigungsbeschlag 3 und der Spindel 11 verläuft das Zugseil 12 um eine Umlenkrolle 13' an dem dem Gurtschloss 1 entgegengesetzten Ende der Verankerungsplatte 6 herum.

Die Funktion entspricht der des Gurtschlossstraffers aus Figur 1: bei einem Unfall wird die Spindel 11 in Rotation versetzt, so dass das Zugseil 12 aufgerollt und das Gurtschloss 1 in Richtung zur Verankerung der Verankerungsplatte 6 am Fahrzeugchassis verschoben wird. Die Rotation der Spindel 11 ist auch hier durch den Pfeil 14 und die Verschiebung des Gurtschlosses 1 durch den Pfeil 15 angedeutet.

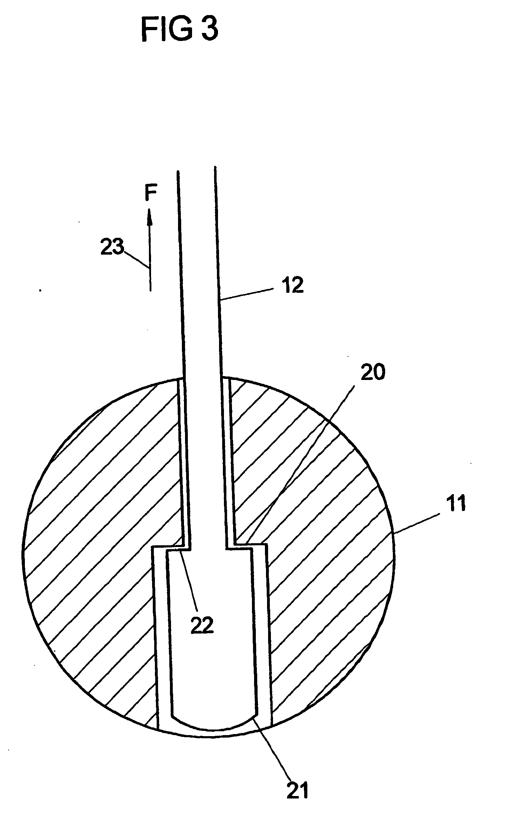

Figur 3 zeigt schematisch eine Seileinhängung nach einer Ausgestaltung der Erfindung. Demnach weist die Spindel 11 eine radiale Bohrung auf mit zwei Abschnitten unterschiedlichen Durchmessers, so dass im Übergangsbereich der beiden Abschnitte eine Schulter 20 gebildet ist.

Das Zugseil 12 weist an seinem zur Befestigung an der Spindel 11 vorgesehenen Ende ein Endstück 21 mit einer gegenüber dem Zugseil 12 größeren Querschnittsfläche. Der Übergangsbereich vom Endstück 21 zum Seil 12 bildet somit ebenfalls eine Schulter 22, die auf der dazu komplementären Schulter 20 in der Spindel 11 aufsitzt und bei Einwirken einer Zugkraft (Pfeil 23) auf das Zugseil 12 ein Lösen des Zugseiles 12 von der Spindel 11 verhindert.

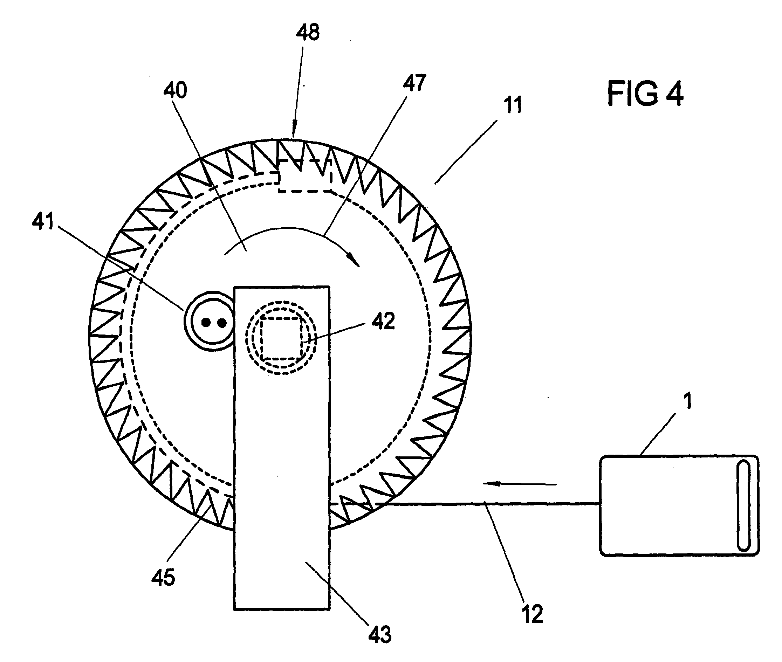

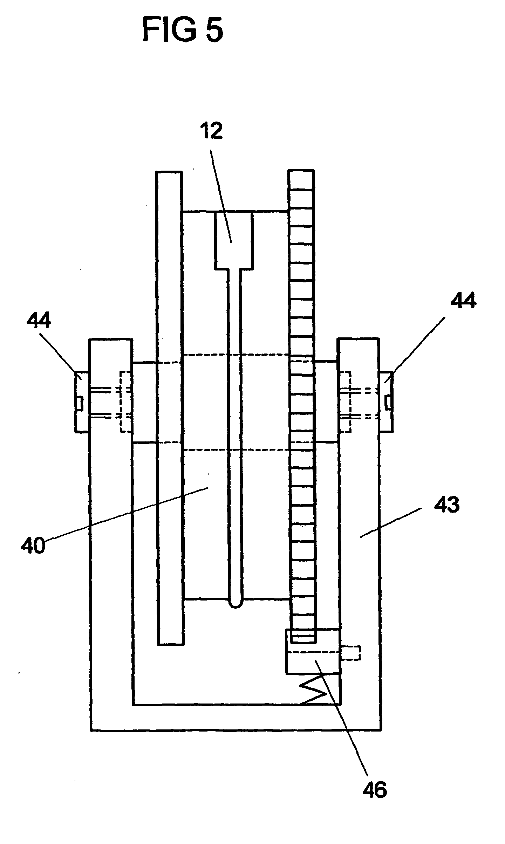

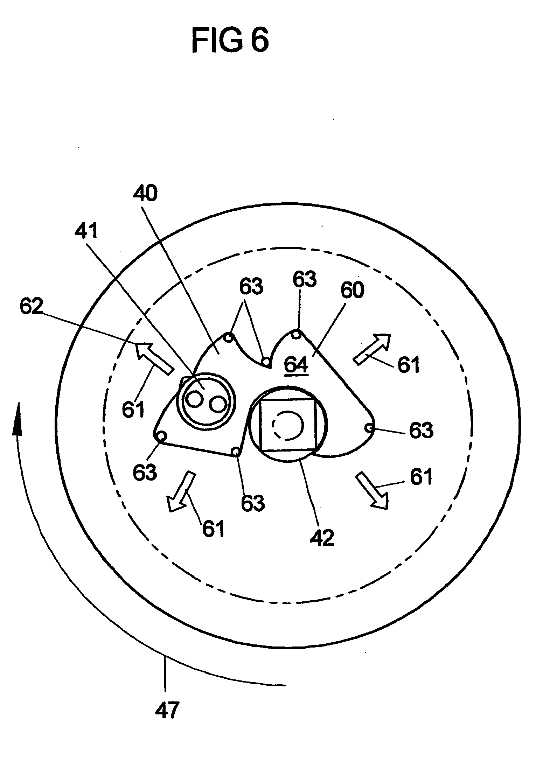

Die Figuren 4 und 5 zeigen einen Gurtschlossstraffer nach einer Ausgestaltung der Erfindung. Der Gurtschlossstraffer enthält einen in die Spindel 11 integrierten pyrotechnischen Antrieb. Dazu ist im Innenraum der Spindel 11 eine Brennkammer 40 enthalten, in der ein Gasgenerator 41 angeordnet ist. Eine Ausgestaltung des pyrotechnischen Antriebs ist weiter unten in Bezug auf die Figur 6 genauer beschrieben.

Die Spindel 11 ist auf einer Kupplungshülse 42 drehbar gelagert. Die Kupplungshülse 42 wiederum ist fest mit einem U-förmigen Rahmen 43 des Fahrzeugchassis 30 verbunden, beispielsweise mittels Schrauben 44.

Am Umfang der Spindel 11 ist eine Sperrverzahnung 45 vorgesehen. Am Rahmen 43 ist eine federbelastete Klinke 46 angeordnet, die mit der Sperrverzahnung 45 in Eingriff bringbar ist. Die Zähne der Sperrverzahnung 45 sind entgegen der Drehrichtung 47 der Spindel 11 beim Straffvorgang abgewinkelt, so dass die Sperrklinke 46 bei Drehung der Spindel 11 in der Drehrichtung 47 über die Zähne hinwegrutscht, während sie in umgekehrter Drehrichtung in die Sperrverzahnung 45 eingreift und die Spindel 11 sperrt.

Illustriert ist außerdem die Einhängung des Zugseiles 12 an der Spindel 11 (Bezugszeichen 48), die vom Prinzip der in Figur 3 dargestellten Einhängung entspricht.

Figur 6 zeigt eine genauere Darstellung des in der Spindel 11 integrierten pyrotechnischen Antriebs. Wie bereits erwähnt, ist die Spindel 11 drehbar auf der Kupplungshülse 42 gelagert. Zum Antrieb der Spindel 11 ist ein vorzugsweise aus Stahl bestehendes Metallband 60 mit beiden Enden an der Kupplungshülse 42 befestigt (eingehängt). Das Metallband 60 verläuft um den Gasgenerator 41 herum; ein verbleibender Teil des Metallbandes 60 ist im Ruhezustand auf der Kupplungshülse 42 bevorratet, d.h. aufgewickelt. Zusätzlich ist ein Teil des Metallbandes 60 um Führungselemente 63 herumgeführt, wodurch ein Raum 64 gebildet ist, in den das durch den Gasgenerator 41 erzeugte Gas hineinströmt und das Metallband 60 beaufschlagt.

Wird der Gasgenerator 41 gezündet, so beaufschlagt das expandierende Verbrennungsgas den um den Gasgenerator 41 und die Führungselemente 63 herum verlaufenden Teil des Metallbandes 60 und bewegt dieses radial nach außen, wie durch Pfeile 61 angedeutet. Dabei wird der auf der Kupplungshülse 42 bevorratete Teil des Metallbandes 60 von dieser abgewickelt. Dadurch entsteht ein Antriebsmoment, das die drehbar gelagerte Spindel 11 in Rotation versetzt.

Die gasdurchlässige Mantelfläche der Spindel 11 begrenzt mit ihrer Innenseite das maximale, theoretisch mögliche Expansionsvolumen der Brennkammer 40, wie durch das Bezugszeichen 62 gezeigt. Wie in den Figuren 4 und 5 gezeigt, ist das Zugseil 12 an der Außenseite der gasdurchlässigen Mantelfläche der Spindel 11 befestigt. Durch das Zünden des Gasgenerators 41 und die resultierende Rotation der Spindel 11 wird das Zugseil 12 auf die Spindel 11 aufgewickelt. Da das Zugseil 12 mit dem Gurtschloss 1 verbunden ist, wird dieses translatorisch in Richtung zum Fahrzeugboden gestrafft.

Die Hemmung der Spindel 11 gegen eine entgegengesetzt gerichtete Drehung nach dem Straffvorgang erfolgt durch die in die Verzahnung 45 eingreifende Klinke 46, wie in den Figuren 4 und 5 dargestellt.

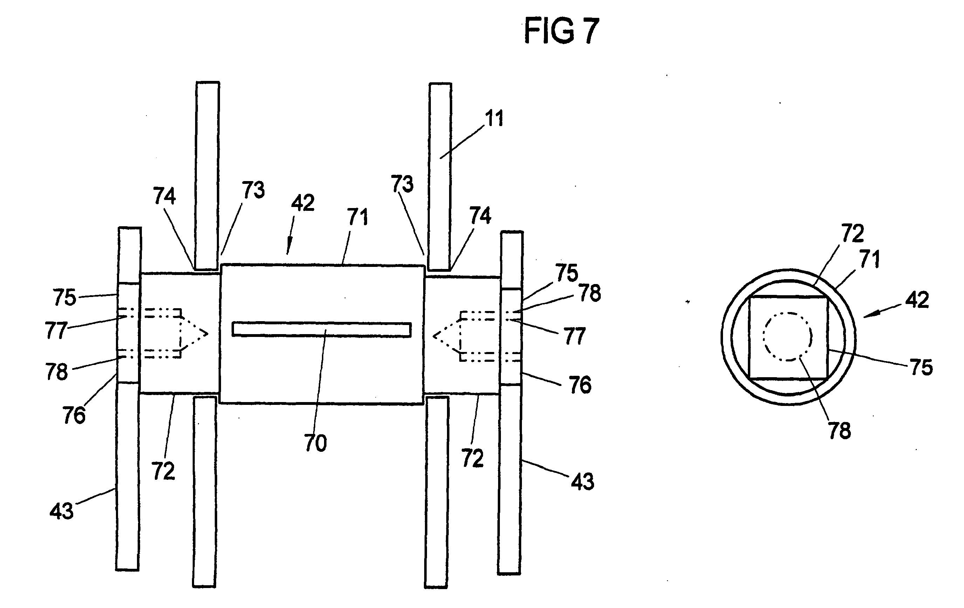

Figur 7 zeigt eine genauere Darstellung der Kupplungshülse 42. An ihrem Umfang weist die Kupplungshülse einen Befestigungsbereich 70 auf zur Einhängung des Metallbandes 60. Entlang ihrer Längsachse besteht die Kupplungshülse 42 aus drei Abschnitten: ein zylindrischer Mittelabschnitt 71 verläuft zwischen den Grundflächen der Spindel 11 und dient zur Einhängung des Metallbandes 60. Dieser Mittelabschnitt 71 verläuft zwischen zylindrischen Abschnitten 72, die zur drehbaren Lagerung (Bezugszeichen 73) der Spindel 11 auf der Kupplungshülse 42 dienen. Der Außendurchmesser der Abschnitte 72 entspricht im wesentlichen dem Durchmesser von entsprechenden kreisförmigen Aussparungen 74 in der Spindel 11. Der Außendurchmesser der Abschnitte 72 ist geringer als der des Mittelabschnittes 71, wodurch an axiales Verschieben der Spindel 11 relativ zu der Kupplungshülse 42 verhindert wird.

An den axial äußeren Enden der Kupplungshülse schließen sich Endabschnitte 75 an die zylindrischen Abschnitte 72 an. Die Endabschnitte 75 haben eine quadratische Grundfläche für eine Aufnahme in entsprechenden quadratischen Aussparungen 76 im Rahmen 43. Dadurch ist die Kupplungshülse 42 drehfest im Rahmen 43 gelagert. Die Grundfläche der Endabschnitte 75 sowie die entsprechenden Aussparungen im Rahmen 43 können auch eine beliebige andere, eckige Form haben. Wesentlich ist, dass durch die Form eine drehfeste Lagerung hergestellt wird.

Weiterhin weist die Kupplungshülse 42 in den Endabschnitten 75 sowie den zylindrischen Abschnitten 72 Bohrungen 77 mit einem Gewinde 78 auf. Diese Bohrungen 77 mit Gewinde 78 dienen zu Verschraubung der Kupplungshülse 42 mit dem Rahmen 43, wie in Figur 5 dargestellt.

Anzumerken ist, dass die Erfindung nicht auf die beschriebenen Ausführungsbeispiele beschränkt ist, sondern Modifikationen im Rahmen des durch die Ansprüche bestimmten Schutzbereiches umfasst.

### Bezugszeichenliste

- 1: Gurtschloss
- 2: Gurt
- 3: Befestigungsbeschlag
- 4: Führungsstift
- 5: Langloch
- 6: Verankerungsplatte
- 10: Aufwickelvorrichtung
- 11: Spindel
- 12: Zugseil
- 13, 13': Umlenkrolle
- 14: Drehrichtung der Spindel bei Gurtschlossstraffung
- 15: Straffrichtung
- 20: Schulter in der Spindel
- 21: Endstück
- 22: Schulter am Zugseil
- 23: Zugrichtung
- 30: Fahrzeugchassis
- 40: Brennkammer
- 41: Gasgenerator
- 42: Kupplungshülse
- 43: Rahmen des Fahrzeugchassis
- 44: Verschraubung
- 45: Verzahnung
- 46: federbelastete Klinke
- 47: Drehrichtung der Spindel bei Straffung
- 60: Brennkammer-Stahlband
- 61: Ausbreitungsrichtung des Brennkammer-Stahlbandes
- 62: maximales Expansionsvolumen
- 63: Führungselemente
- 64: durch Brennkammer-Stahlband eingegrenzter Raum
- 70: Einhängung des Brennkammer-Stahlbandes
- 71: Mittelabschnitt
- 72: zylindrische Teilabschnitte
- 73: Lagerstelle der Antriebsspindel auf der Kupplungshülse
- 74: Aussparung in der Spindel
- 75: Vierkant-Endabschnitte
- 76: Aussparung im Rahmen des Fahrzeugchassis
- 77: Bohrungen
- 78: Gewinde

## Patentansprüche

1. Gurtschlossstraffer für ein Sicherheitsgurtsystem in einem Fahrzeug, mit:
einer drehbaren Spindel (11), die über ein Zugseil (12) mit einem Gurtschloss (1) verbunden ist und
einem Antrieb (41, 60) zur Rotation der Spindel (11), wodurch das Zugseil (12) auf der Spindel (11) aufgerollt und das Gurtschloss (1) in Straffrichtung bewegt wird, und wobei der Antrieb (41, 60) in der Spindel integriert ist,
**dadurch gekennzeichnet, dass**
- der Gurtschlossstraffer eine Kupplungshülse (42) aufweist, die drehfest mit einem Rahmen (43) des Fahrzeugchassis (30) verbunden ist, wobei die Spindel (11) drehbar auf der Kupplungshülse (42) gelagert ist,
- der Antrieb (41, 60) einen Gasgenerator (41) umfasst, der an der Spindel (11) befestigt ist, und ein Antriebsband (60), das mit seinen beiden Enden an der Kupplungshülse (42) befestigt und im Ruhezustand des Gurtschlossstraffers teilweise auf der Kupplungshülse (42) aufgewickelt ist und um den Gasgenerator (41) herum verläuft, so dass das Antriebsband (60) einen Raum (40) eingrenzt,
- wobei durch den Gasgenerator (41) erzeugtes Gas in den Raum (40) hineinströmt, das Antriebsband (60) beaufschlagt und **dadurch** den Raum (40) vergrößert, wodurch das Antriebsband (60) von der Kupplungshülse (42) abgewickelt wird, eine Antriebskraft erzeugt wird und die Spindel (11) in Rotation versetzt wird.

2. Gurtschlossstraffer nach Anspruch 1, wobei das Antriebsband (60) im Ruhezustand des Gurtsstraffers auch um einen oder mehrere Führungselemente (63) herum verläuft.

3. Gurtschlossstraffer nach Anspruch 1 oder 2, wobei die Kupplungshülse (42) entlang ihrer Längsachse aus einem zylindrischen Mittelabschnitt (71), daran anschließenden zylindrischen Teilabschnitten (72), sowie im Querschnitt eckigen Endabschnitten (75) besteht, wobei die Spindel (11) an den Teilabschnitten (72) der Kupplungshülse (42) gelagert ist, und die Endabschnitte (75) jeweils formschlüssig in Aussparungen (76) im Rahmen (43) aufgenommen sind.

4. Gurtschlossstraffer nach Anspruch 3, wobei der Mittelabschnitt (71) einen größeren Durchmesser hat, als die Teilabschnitte (72).

5. Gurtschtossstraffer nach Anspruch 3 oder 4, wobei die Endabschnitte (75) und die Teilabschnitte (72) Bohrungen (77) mit einem Gewinde (78) aufweisen, zur Aufnahme von Schrauben (44) zur Verschraubung der Kupplungshülse (42) mit dem Rahmen (43).

6. Gurtschlossstraffer nach einem der vorhergehenden Ansprüche, wobei die Spindel (11) mit einer Sperreinrichtung (45, 46) gekoppelt ist, die eine Rotation der Spindel (11) entgegen der Zugseil-Aufrollrichtung blockiert und ein Abrollen des Zugseiles (12) verhindert.

7. Gurtschlossstraffer nach Anspruch 6, wobei die Sperreinrichtung (45, 46) durch eine Verzahnung (45) am Umfang der Spindel (11) und eine Klinke (46) am Fahrzeugchassis (30) gebildet wird, wobei die Klinke (46) mit der Verzahnung (45) in Eingriff bringbar ist, und die Verzahnung (45) derart ausgebildet ist, dass ein Eingriff nur bei Rotation der Spindel (11) entgegen der Zugseil-Aufrollrichtung stattfindet.

8. Gurtschlossstraffer nach einem der vorhergehenden Ansprüche, wobei die Spindel (11) eine Aussparung zur Aufnahme eines Endabschnittes des Zugseiles (12) aufweist, die aus zwei Abschnitten mit unterschiedlichen Querschnittsflächen besteht, so dass in der Aussparung eine Schulter (20) gebildet ist, und das Zugseil (12) ein Endstück (21) mit gegenüber dem Zugseil (12) größerer Querschnittsfläche aufweist, und wobei das Endstück (21) auf der Schulter (20) aufsitzt und ein Lösen des Zugseiles (12) von der Spindel (11) bei Zugbelastung des Zugseiles (12) verhindert.

9. Gurtschlossstraffer nach Anspruch 8, wobei die Aussparung entlang des Umfanges der Spindel (11) verläuft.

10. Gurtschlossstraffer nach Anspruch 8, wobei die Aussparung durch eine radiale Bohrung in der Spindel (11) gebildet ist.

11. Gurtschlossstraffer nach einem der vorhergehenden Ansprüche, wobei das Zugseil (12) mit einem Ende an der Spindel (11) und mit dem anderen Ende am Fahrzeugchassis (30) befestigt ist, und dazwischen über eine am Gurtschloss (1) vorgesehene Umlenkrolle (13) verläuft.

## Claims

1. Belt-buckle tightener for a seat belt system in a vehicle, having:
a rotatable spindle (11) which is connected to a belt buckle (1) via a draw-in cable (12) and
a drive (41, 60) for rotation of the spindle (11), as a result of which the draw-in cable (12) is rolled up on the spindle (11) and the belt buckle (1) is moved in the tightening direction, and the drive (41, 60) being integrated in the spindle,
**characterized in that**
- the belt buckle tightener has a coupling sleeve (42) which is connected in a rotationally fixed manner to a frame (43) of the vehicle chassis (30), the spindle (11) being mounted rotatably on the coupling sleeve (42),
- the drive (41, 60) comprises a gas generator (41), which is fastened to the spindle (11), and a driving belt (60), which is fastened at both of its ends to the coupling sleeve (42) and, in the inoperative state of the belt-buckle tightener, is partially wound up on the coupling sleeve (42) and runs around the gas generator (41), the driving belt (60) thus bounding a space (40),
- gas which is produced by the gas generator (41) flowing into the space (40), acting upon the driving belt (60) and thereby enlarging the space (40), as a result of which the driving belt (60) is unwound from the coupling sleeve (42), a driving force is produced and the spindle (11) is caused to rotate.

2. Belt-buckle tightener according to Claim 1, the driving belt (60), in the inoperative state of the belt tightener, also running around one or more guide elements (63).

3. Belt-buckle tightener according to Claim 1 or 2, the coupling sleeve (42) comprising, along its longitudinal axis, a cylindrical central section (71), cylindrical subsections (72) connected thereto, and end sections (75) which are angular in cross-section, the spindle (11) being mounted on the subsections (72) of the coupling sleeve (42), and the end sections (75) each being held in a form-fitting manner in cutouts (76) in the frame (43).

4. Belt-buckle tightener according to Claim 3, the central section (71) having a larger diameter than the subsections (72).

5. Belt-buckle tightener according to Claim 3 or 4, the end sections (75) and the subsections (72) having holes (77) with a thread (78), for receiving screws (44) for screwing the coupling sleeve (42) to the frame (43).

6. Belt-buckle tightener according to one of the preceding claims, the spindle (11) being coupled to a blocking device (45, 46) which blocks rotation of the spindle (11) counter to the rolling-up direction of the draw-in cable and prevents the draw-in cable (12) from unrolling.

7. Belt-buckle tightener according to Claim 6, the blocking device (45, 46) being formed by a toothing (45) on the circumference of the spindle (11) and a latch (46) on the vehicle chassis (30), it being possible for the latch (46) to be brought into engagement with the toothing (45), and the toothing (45) being designed in such a manner that engagement takes place only when the spindle (11) is rotated counter to the rolling-up direction of the draw-in cable.

8. Belt-buckle tightener according to one of the preceding claims, the spindle (11) having a cutout for receiving an end section of the draw-in cable (12), the said cutout comprising two sections with different cross-sectional surfaces, so that a shoulder (20) is formed in the cutout, and the draw-in cable (12) has an end piece (21) with a larger cross-sectional surface than the draw-in cable (12), and the end piece (21) sitting on the shoulder (20) and preventing the draw-in cable (12) from becoming detached from the spindle (11) when the draw-in cable (12) is subjected to a tensile load.

9. Belt-buckle tightener according to Claim 8, the cutout running along the circumference of the spindle (11).

10. Belt-buckle tightener according to Claim 8, the cutout being formed by a radial hole in the spindle (11).

11. Belt-buckle tightener according to one of the preceding claims, the draw-in cable (12) being fastened at one end to the spindle (11) and at the other end to the vehicle chassis (30) and in between running over a deflection pulley (13) provided on the belt buckle (1).

## Revendications

1. Prétensionneur de boucle de ceinture pour un système à ceinture de sécurité dans un véhicule, comprenant :
une broche rotative (11) reliée à une serrure (1) de ceinture par l'intermédiaire d'un câble de traction (12), et
un entraînement (41, 60) pour imprimer, à ladite broche (11), une rotation ayant pour effets d'enrouler le câble de traction (12) sur ladite broche (11) et d'imprimer un mouvement à la serrure (1) de la ceinture, dans le sens d'un raidissement, ledit entraînement (41, 60) étant intégré dans la broche,
**caractérisé par le fait que**
- ledit prétensionneur présente une douille d'accouplement (42) verrouillée en rotation avec un cadre (43) du châssis (30) du véhicule, la broche (11) étant montée à rotation sur ladite douille d'accouplement (42),
- l'entraînement (41, 60) comprend un générateur de gaz (41) fixé à la broche (11), et un ruban d'entraînement (60) qui est fixé à la douille d'accouplement (42) par ses deux extrémités et qui, lorsque le prétensionneur est au repos, est partiellement enroulé sur la douille d'accouplement (42) et défile autour du générateur de gaz (41), de telle sorte que ledit ruban d'entraînement (60) délimite intérieurement un espace (40),
- sachant que du gaz engendré par le générateur (41) afflue dans l'espace (40), sollicite le ruban d'entraînement (60) et accroît ainsi ledit espace (40), si bien que ledit ruban d'entraînement (60) est déroulé de la douille d'accouplement (42), qu'une force d'entraînement est développée, et que la broche (11) est animée d'une rotation.

2. Prétensionneur de boucle de ceinture, selon la revendication 1, le ruban d'entraînement (60) défilant également autour d'un ou de plusieurs élément(s) de guidage (63) lorsque ledit prétensionneur est au repos.

3. Prétensionneur de boucle de ceinture, selon la revendication 1 ou 2, la douille d'accouplement (42) se composant, le long de son axe longitudinal, d'une région centrale cylindrique (71), de régions partielles cylindriques (72) se rattachant à cette dernière, ainsi que de régions extrêmes (75) offrant une section transversale polygonale, sachant que la broche (11) est montée sur les régions partielles (72) de ladite douille d'accouplement (42), et que les régions extrêmes (75) sont respectivement logées, par concordance de formes, dans des dépouilles (76) pratiquées dans le cadre (43).

4. Prétensionneur de boucle de ceinture, selon la revendication 3, la région centrale (71) possédant un plus grand diamètre que les régions partielles (72).

5. Prétensionneur de boucle de ceinture, selon la revendication 3 ou 4, les régions extrêmes (75) et les régions partielles (72) présentant des perçages (77) munis d'un filetage (78) en vue de recevoir des vis (44) destinées à la solidarisation, par vissage, de la douille d'accouplement (42) et du cadre (43).

6. Prétensionneur de boucle de ceinture, selon l'une des revendications précédentes, la broche (11) étant accouplée à un mécanisme de verrouillage (45, 46) qui bloque une rotation de ladite broche (11) en sens inverse de la direction d'enroulement du câble de traction, et interdit un déroulement dudit câble de traction (12).

7. Prétensionneur de boucle de ceinture, selon la revendication 6, le mécanisme de verrouillage (45, 46) étant matérialisé par une denture (45) située sur le pourtour de la broche (11), et par un cliquet (46) situé sur le châssis (30) du véhicule, sachant que ledit cliquet (46) peut être mis en prise avec ladite denture (45), et que ladite denture (45) est réalisée de façon telle qu'une venue en prise s'opère uniquement lors d'une rotation de la broche (11) en sens inverse de la direction d'enroulement du câble de traction.

8. Prétensionneur de boucle de ceinture, selon l'une des revendications précédentes, la broche (11) comportant un évidement qui est conçu pour recevoir un tronçon extrême du câble de traction (12) et qui comprend deux régions à superficies de section transversale différentes, donnant ainsi naissance à un épaulement (20) dans ledit évidement ; ledit câble de traction (12) présentant une pièce d'extrémité (21) qui offre une plus grande superficie de section transversale que ledit câble de traction (12) ; et ladite pièce d'extrémité (21) reposant sur l'épaulement (20), et empêchant le câble de traction (12) de se dissocier d'avec la broche (11) lorsqu'une contrainte de traction est imposée audit câble (12).

9. Prétensionneur de boucle de ceinture, selon la revendication 8, l'évidement s'étendant le long du pourtour de la broche (11).

10. Prétensionneur de boucle de ceinture, selon la revendication 8, l'évidement étant matérialisé par un perçage radial pratiqué dans la broche (11).

11. Prétensionneur de boucle de ceinture, selon l'une des revendications précédentes, le câble de traction (12) étant fixé à la broche (11) par une extrémité et au châssis (30) du véhicule, par l'autre extrémité, son segment intermédiaire défilant sur un rouleau de renvoi (13) prévu sur la serrure (1) de la ceinture.
